# DEMANDE DE BREVET EUROPEEN

(11) **EP 2 354 033 A1**
(43) Date de publication de la demande: **10.08.2011**
(21) Numéro de dépôt: 11150458.5
(22) Date de dépôt: 10.01.2011
(51) Int. Cl.: B65D 75/00, B65D 55/08, B65D 75/58

(54) **Film en matière plastique mono-orienté pour la fabrication d'un manchon thermorétractable déchirable, et manchon réalisé à partir d'un tel film**

(30) Priorité: 15.01.2010 FR 1050283
(71) Demandeur: Sleever International Company, 91420 Morangis (FR)
(72) Inventeur: Fresnel, Eric, 75006 Paris (FR)
(74) Mandataire: Parzy, Benjamin Alain

(57) **Abrégé**

L'invention est relative à un film en matière plastique étirée pour présenter une orientation privilégiée de rétraction et utilisé notamment pour la fabrication de manchons thermorétractables, le film comportant au moins une ligne de fragilisation mécanique et au moins une zone de surépaisseur locale (12,22) s'étendant le long de la ligne de fragilisation (11, 21) pour border celle-ci, la ligne de fragilisation et la zone de surépaisseur locale adjacente définissant ensemble une ligne de déchirement. Selon l'invention la zone de surépaisseur locale est constituée par un apport de matière liquide ou semi-liquide sur le film, la matière apportée étant appliquée sur le film en quantité qui dépend d'un taux de rétraction anticipé dans la portion du film comportant la ligne de déchirement lors d'une thermorétraction sur un objet d'un manchon fabriqué à l'aide d'un tel film.

## Description

L'invention est relative à un film en matière plastique mono-orienté pour la fabrication d'un manchon thermorétractable déchirable, ainsi qu'à un manchon thermorétractable réalisé à partir d'un tel film.

### ARRIERE-PLAN TECHNOLOGIQUE DE L'INVENTION

On connaît des manchons thermorétractables constitués d'un film en matière plastique mono-orienté préalablement étiré selon une direction déterminée pour lui donner une capacité de rétraction sous l'effet de la chaleur selon la direction d'étirement. De tels manchons sont notamment utilisés pour recouvrir la paroi de récipients de toutes sortes.

Il serait intéressant de conférer à de tels manchons une capacité de déchirement selon une ligne de déchirement privilégiée. Par exemple, un manchon de ce type peut être utilisé pour recouvrir la paroi d'un récipient ainsi que son bouchon, afin d'en garantir la non-ouverture. Il est dès lors intéressant de prévoir sur le manchon des moyens de déchirement contrôlés pour séparer le manchon en une portion restant à demeure sur le récipient, et une portion qui sera éliminée par l'utilisateur pour permettre l'ouverture du récipient.

Il a bien sûr été envisagé de définir sur le manchon une ligne de déchirement en formant sur le film une ligne de fragilisation mécanique, par exemple par la réalisation de microperforations ou par découpe laser à mi-chair. Cependant, ce procédé ne donne pas des résultats satisfaisants. Dans certains cas, la matière du manchon réalisé à partir d'un tel film ne se déchire pas selon cette ligne, mais de façon plus ou moins aléatoire, au gré des alignements des molécules constituant la matière du film.

Il est à noter que ce problème est spécifique aux films acquérant une orientation privilégiée à la suite de leur étirage, en particulier aux films mono-orientés utilisés dans la fabrication de manchons thermorétractés. Dans certains films constitués principalement de copolymères, une faible quantité de ce copolymère cristalise pour former dans le film des cristalites, c'est-à-dire des portions ordonnées et alignées de chaînes polymères adjacentes. Ces cristalites s'étendent dans le sens de l'étirement du film et la proportion de cristalite ainsi formée influe directement sur la déchirabilité du film. En effet, ces cristalites constituent des points durs qui sont susceptibles de dévier le déchirement d'un manchon thermorétracté réalisé à l'aide d'un tel film, donnant lieu à des déchirements aléatoires. On peut également rencontrer ce problème de déchirabilité aléatoire sur des manchons réalisés à l'aide de films étirés dont la structure est rendue fortement inhomogène par l'inclusion de molécules de taille importante formant des obstacles à la déchirabilité du manchon (par exemple, une inclusion de polystyrène dans un film constitué de copolymères de styrène et de butadiène, ou encore une inclusion de copolymères de polyéthylène dans un film constitué de polyéthylène homopolymère). On ne rencontre bien sûr pas ce genre de problème dans le domaine des étiquettes adhésives déchirables, faites de papier ou de film en matière plastique amorphe ou bi-orientée.

On a également pensé à intégrer dans le film une bande d'arrachage ou « tirecel » en matière plastique comme illustré par exemple par le document FR 2 763 921. Cependant, une telle tirecel est loin de présenter les taux de rétraction importants dont est capable la matière du film, de sorte que l'utilisation d'un tel film n'est pas envisageable pour le recouvrement de récipients aux formes fortement évolutives requérant des taux de rétraction importants.

Le document GB 1013783 décrit quant à lui la réalisation de lignes de déchirement comportant une ligne de fragilisation mécanique bordée par une zone de surépaisseur locale constituée d'une bande rapportée.

La zone de surépaisseur locale guide le déchirement le long de la ligne de fragilisation mécanique et empêche celui-ci de bifurquer. Cependant, une telle solution est également peu adaptée pour le recouvrement des récipients aux formes fortement évolutives.

### OBJET DE L'INVENTION

L'invention a pour objet de proposer un film mono-orienté permettant de réaliser des manchons thermorétractables déchirables selon une ligne de déchirement prédéfinie.

### BREVE DESCRIPTION DE L'INVENTION

En vue de la réalisation de ce but, on propose un film en matière plastique étirée pour présenter une orientation privilégiée de rétraction, film qui sert pour la fabrication de manchons thermorétractables et qui comporte au moins une ligne de déchirement comprenant une ligne de fragilisation mécanique et au moins une zone de surépaisseur locale s'étendant le long de la ligne de fragilisation pour border celle-ci. Selon l'invention, la zone de surépaisseur locale est constituée par un apport de matière liquide ou semi-liquide sur le film, la matière étant appliquée sur le film en quantité qui dépend d'un taux de rétractation anticipé dans la portion du film comportant la ligne de déchirement lors d'une thermorétraction sur un objet d'un manchon fabriqué à l'aide d'un tel film.

Diverses expérimentations ont permis de vérifier que, sur un manchon thermorétracté réalisé à l'aide d'un tel film, la présence de la zone de surépaisseur le long de la ligne de fragilisation empêche un déchirement initié le long de la ligne de déchirement ainsi définie de bifurquer, de sorte que le déchirement se propage selon ladite ligne jusqu'au bout de celle-ci, ce en particulier lorsque l'orientation de la ligne de déchirement est perpendiculaire ou oblique à l'orientation privilégiée du film.

L'adaptation de la quantité de matière apportée permet de rigidifier localement le film de sorte que la surépaisseur ainsi apportée joue un rôle de guide de déchirement, mais puisse néanmoins suivre la thermorétraction du film sans contrarier celle-ci au point que le film forme des vagues sur le manchon rétracté.

De façon avantageuse, on réalise sur le film deux lignes de déchirement parallèles définies chacune par la juxtaposition d'au moins une ligne de fragilisation et d'au moins une zone de surépaisseur locale adjacente. Ainsi, sur un manchon fabriqué à l'aide d'un tel film, les deux lignes de déchirement définissent entre elles une bande de déchirement. Il sera alors avantageux de prévoir sur le film une découpe transversale à ces deux lignes, pour définir sur le manchon un onglet de préhension de la bande de déchirement.

L'invention sera mieux comprise à la lumière de la description détaillée qui suit de plusieurs modes de mise en oeuvre de l'invention.

### BREVE DESCRIPTION DES FIGURES

- la figure 1 est une vue en perspective d'un récipient recouvert d'un manchon thermorétracté réalisé à partir d'un film thermorétractable à ligne de déchirement selon l'invention ;
- la figure 2A est une vue en coupe selon la ligne II de la figure 4 d'un film thermorétractable selon un premier mode de mise en oeuvre de l'invention, les épaisseurs du film étant exagérées pour plus de clarté ;
- la figure 2B est une vue en coupe analogue à la figure 2A d'un film thermorétractable selon un deuxième mode de mise en oeuvre de l'invention ;
- la figure 2C est une vue en coupe analogue à la figure 2A d'un film thermorétractable selon un troisième mode de mise en oeuvre de l'invention ;
- la figure 2D est une vue en coupe selon la ligne III-III de la figure 5 d'un film thermorétractable selon un quatrième mode de mise en oeuvre de l'invention ;
- la figure 3 est une vue en perspective d'un récipient recouvert d'un manchon thermorétracté réalisé à partir d'un film thermorétractable à ligne de déchirement selon l'invention ;
- la figure 4 est une vue à plat du film utilisé pour recouvrir le récipient de la figure 1 ;
- la figure 5 est une vue à plat du film utilisé pour recouvrir le récipient de la figure 3, avec un agrandissement local au niveau de la ligne de déchirement.

### DESCRIPTION DETAILLEE DES FIGURES

Le domaine technologique des films en matière plastique étirée thermorétractables est bien connu, et il suffira de rappeler ici qu'un tel film peut présenter des taux de rétraction importants. L'invention s'applique en particulier à des films étirés conférant à ces derniers une orientation privilégiée, par exemple, et bien que cela ne soit pas limitatif, un film en copolymère de polyéthylène, comportant un pourcentage donné de cristalites orientés majoritairement selon la direction d'étirement.

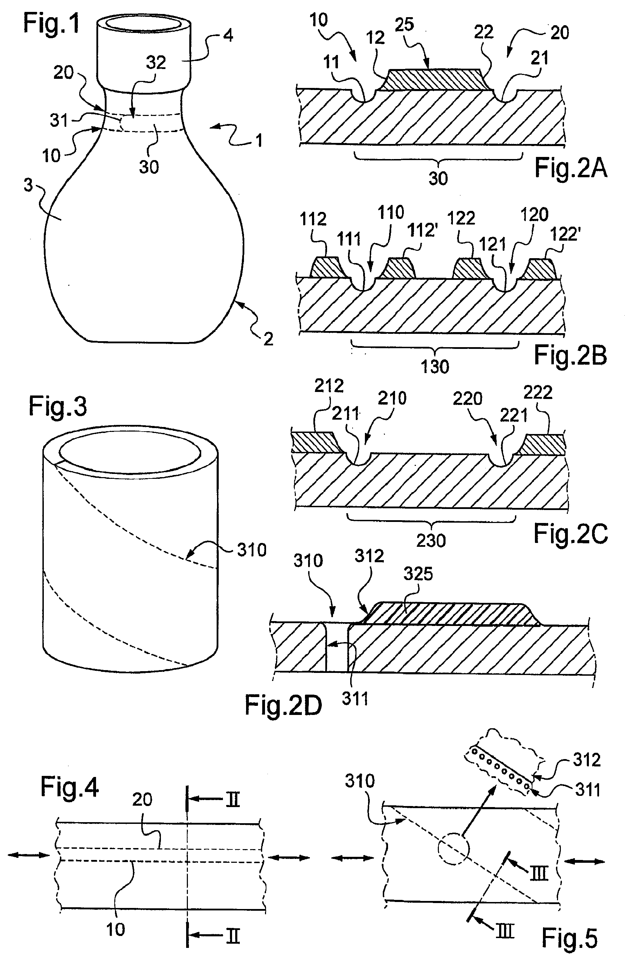

A la figure 1 est illustré un récipient 1 recouvert au moyen d'un manchon 2 thermorétracté qui est fabriqué à partir d'un film thermorétractable présentant selon l'invention deux lignes de déchirement 10,20 parallèles délimitant entre elles une bande de déchirement 30. Une découpe transversale 31 définit sur la bande de déchirement 30 un onglet de préhension 32 par lequel l'utilisateur initie le déchirement de la bande de déchirement 30. Ici, les lignes de déchirement 10,20 s'étendent dans le sens d'étirement du film, et donc perpendiculairement à l'orientation privilégiée du film.

Le déchirement de la bande de déchirement 30 permet de séparer la partie inférieure 3 du manchon, qui reste à demeure sur le récipient, de la partie supérieure 4 du manchon, qui peut enlevée et ainsi permettre l'accès au bouchon du récipient.

Comme visible à la figure 4, le film utilisé est un film thermorétractable obtenu par étirement d'un film en matière plastique, par exemple du polyéthylène. Ici, les lignes de déchirement 20 sont réalisées parallèlement à la direction d'étirement du film (et donc à la direction principale de rétraction du manchon). Comme le lecteur l'aura immédiatement perçu, les lignes de déchirement 10,20 sont disposées sur le récipient de la figure 1 dans une zone de forme fortement évolutive, et subissent donc des taux de rétraction importants lors de la thermorétraction du manchon réalisé à partir du film de la figure 4.

La façon dont les lignes de déchirement sont réalisées sur le film est maintenant expliquée en détail en référence aux figures 2A à 2C, illustrant divers modes de réalisation.

Selon un premier mode de réalisation illustré à la figure 2A, on réalise sur le film deux lignes de fragilisation 11,21, ici par une découpe laser à mi-chair dans l'épaisseur du film (par souci de simplification, le film a été illustré comme étant monocouche, mais ceci n'est pas limitatif, et le film peut comporter plusieurs couches). Sur la figure, on distingue les sillons laissés par cette découpe. Puis, selon l'invention, on applique à la surface du film une couche de vernis polymère 25 en forme de bande qui s'étend entre les lignes de fragilisation 11,21 jusqu'à proximité de celles-ci pour former des surépaisseurs locales 12,22 bordant les lignes de fragilisation 11,21. L'association d'une ligne de fragilisation et d'une zone de surépaisseur locale adjacente définit une ligne de déchirement le long de laquelle le manchon peut être déchiré. Les deux lignes de déchirement ainsi définies délimitent entre elles la bande de déchirement 30.

Lors de la réalisation d'un manchon, le film ainsi préparé subira une thermorétraction, y compris les portions du film comportant les lignes de déchirement ainsi constituées. Il convient de remarquer que le vernis appliqué sur le film thermorétractable rigidifie localement le film, et bien qu'il se rétracte avec le film, il diminue localement la capacité de rétraction de celui-ci. En particulier, il est à remarquer que les lignes de déchirement 10,20 s'étendent ici au niveau d'une portion du récipient 1 de faible diamètre dans laquelle la rétraction du manchon lors de sa thermorétraction est particulièrement importante. Il convient donc que la surépaisseur ainsi apportée ne contrarie pas la capacité de rétraction du film formant le manchon.

A cet égard, il conviendra donc de choisir les caractéristiques du vernis et de doser son application sur le film de telle sorte que la surépaisseur ainsi apportée rigidifie localement le film et joue un rôle de guide de déchirement, mais puisse néanmoins suivre la thermorétraction du film sans contrarier celle-ci au point que le film finisse par former des vagues sur le manchon une fois celui-ci thermorétracté. En particulier, il conviendra d'adapter l'épaisseur de la couche de vernis, en la diminuant si la zone concernée doit subir une rétraction importante.

Ainsi, si l'on désire réaliser sur un même film deux lignes de déchirement parallèles mais s'étendant sur des portions de ce film qui subiront lors de la thermorétraction des taux de rétraction distincts, il conviendra d'adapter l'application de vernis pour chacune de ces lignes de déchirement pour tenir compte de cette différence de taux de rétraction. En première approche, il apparaît intéressant de faire varier l'épaisseur de la couche de vernis ainsi appliqué de façon inversement proportionnelle au taux de rétraction anticipé dans la zone dans laquelle s'étend la ligne de déchirement concernée.

En variante, plutôt que de faire varier l'épaisseur de la couche de vernis, il est également possible de faire varier la largeur de la couche de vernis rapportée, ou encore, de procéder à une application de vernis non pas continue, mais interrompue, en formant avec le vernis une ligne de tirets séparés par des intervalles dont on fera varier la longueur en fonction du taux de rétraction anticipé. On peut bien sûr mixer les différentes possibilités pour faire varier la quantité de vernis apportée en fonction du taux de rétraction anticipé.

Selon un deuxième mode de réalisation illustré à la figure 2B, on forme des lignes de déchirement 110,120 en réalisant sur le film des lignes de fragilisation 111, 121 qui sont bordées de zones de surépaisseur locale 112,112' s'étendant de part et d'autre de la ligne de fragilisation 111, et de zones de surépaisseurs locales 122,122' s'étendant de part et d'autre de la ligne de fragilisation 121. Les deux lignes de déchirement 110,120 définissent entre elles une bande de déchirement 130. Ici, comme dans le mode de réalisation précédent, les lignes de fragilisation sont réalisées par découpe laser à mi-chair, tandis que les zones de surépaisseur locales sont réalisées par apport de vernis polymère.

Selon un troisième mode de réalisation illustré à la figure 2C, les lignes de déchirement 210,220 comportent des lignes de fragilisation 211,221 bordées du côté extérieur à la bande de déchirement 230 par des zones de surépaisseur locale 212,222.

Bien qu'ici, la ligne de déchirement s'étende parallèlement à la direction d'étirement du film, cette disposition n'est pas indispensable. Comme illustré à la figure 5, on peut réaliser un film avec une ligne de déchirement 310 s'étendant obliquement par rapport à la direction d'étirement du film. Comme illustré à la figure 3, un tel film permet de réaliser des manchons dont la ligne de déchirement s'étend selon une spirale, ce qui permet, en initiant le déchirement en haut du manchon, de dégager celui-ci entièrement du récipient.

Comme illustré à la figure 2D, la ligne de déchirement 310 comporte d'une part une ligne de fragilisation 311 constituée ici d'une suite de microperforations alignées, et d'autre part une zone de surépaisseur locale 312 bordant la ligne de fragilisation 311.

Ainsi, la réalisation sur le film étiré d'une zone de surépaisseur locale permet de définir sur le manchon thermorétracté une ligne de déchirement permettant de guider le déchirement du manchon le long de cette ligne.

L'invention n'est pas limitée à ce qui vient d'être décrit, mais englobe au contraire toute variante entrant dans le cadre défini par les revendications.

En particulier, la surépaisseur locale pourra être obtenue comme illustré ici par application de vernis, et plus généralement de matière liquide ou semi-liquide à viscosité contrôlée.

La matière pourra être appliquée par contact (brosse, pinceau, seringue...) ou encore sans contact (buse à débit contrôlé, cylindre enduit...). La matière sera alors de préférence séchée de façon contrôlée (soufflage d'air chaud, rayonnement UV...).

La matière utilisée pourra être transparente ou encore teintée, ou comporter des inclusions telles que des pigments ou des paillettes, ajoutant alors un effet esthétique, ou améliorant la visibilité de la ligne de déchirement.

Enfin, bien que dans les exemples illustrés, les lignes de déchirement soient rectilignes, ces lignes pourront être courbes, voire s'étendre selon un contour fermé pour définir sur le manchon une portion amovible qui peut être ôtée par déchirement le long de la ligne de déchirement fermée.

## Revendications

1. Film en matière plastique étirée pour présenter une orientation privilégiée de rétraction et utilisé notamment pour la fabrication de manchons thermorétractables, le film comportant au moins une ligne de fragilisation mécanique (11,21;111,121;211,221;311,312) et au moins une zone de surépaisseur locale (12,22;112,112'; 122,122'; 212,222) s'étendant le long de la ligne de fragilisation pour border celle-ci, la ligne de fragilisation et la zone de surépaisseur locale adjacente définissant ensemble une ligne de déchirement, **caractérisé en ce que** la zone de surépaisseur locale est constituée par un apport de matière liquide ou semi-liquide sur le film, la matière apportée étant appliquée sur le film en quantité qui dépend d'un taux de rétraction anticipé dans la portion du film comportant la ligne de déchirement lors d'une thermorétraction sur un objet d'un manchon fabriqué à l'aide d'un tel film.

2. Film selon la revendication 1, dans lequel la quantité de matière apportée est inversement proportionnelle audit taux de rétraction anticipé.

3. Film selon la revendication 1, dans lequel la matière apportée est du vernis polymère.

4. Film selon la revendication 3, dans lequel le vernis est traité pour augmenter la visibilité de la ligne de déchirement.

5. Film selon la revendication 4, dans lequel le traitement est choisi parmi la teinture du vernis, l'inclusion de pigments, l'inclusion de paillettes.

6. Film selon la revendication 1, comportant deux zones de surépaisseur locale (112,112' ; 122,122') bordant la ligne de fragilisation (111,121) de part et d'autre de celle-ci.

7. Film selon la revendication 1, dans lequel la ligne de déchirement s'étend selon un contour fermé.

8. Film selon la revendication 1, comportant deux lignes de déchirement parallèles définissant entre elles une bande de déchirement (30 ;130 ;230).

9. Film selon la revendication 8, comportant une découpe (31) transversale aux deux lignes de déchirement pour définir sur la bande de déchirement un onglet de préhension (32).

10. Manchon thermorétractable fabriqué à partir d'un film selon l'une des revendications précédentes.

11. Objet revêtu par thermorétractage d'un manchon selon la revendication 10.
